# EUROPÄISCHE PATENTSCHRIFT

(11) **EP 3 449 789 B1**
(45) Veröffentlichungstag und Bekanntmachung des Hinweises auf die Patenterteilung: **29.01.2020**
(21) Anmeldenummer: 18186778.9
(22) Anmeldetag: 01.08.2018
(51) Int. Cl.: A47L 9/00

(54) **SICH SELBSTTÄTIG FORTBEWEGENDES BODENBEARBEITUNGSGERÄT UND RAD FÜR EIN SOLCHES GERÄT**
AUTOMATICALLY MOVING FLOOR TREATMENT DEVICE AND WHEEL FOR SUCH A DEVICE
APPAREIL DE TRAITEMENT DE SOL SE DÉPLAÇANT AUTOMATIQUEMENT ET ROUE POUR UN TEL APPAREIL

(30) Priorität: 11.08.2017 DE 102017118384
(43) Veröffentlichungstag der Anmeldung: 06.03.2019
(73) Patentinhaber: Vorwerk & Co. Interholding GmbH, 42275 Wuppertal (DE)
(72) Erfinder: Blum, Michael, 42289 Wuppertal (DE)
(74) Vertreter: Müller, Enno

(56) Entgegenhaltungen:
- EP-A2- 2 702 915
- DE-A1-102008 009 617
- US-A1- 2017 181 592

## Beschreibung

### Gebiet der Technik

Die Erfindung betrifft ein Rad, für ein sich selbsttätig fortbewegendes Bodenbearbeitungsgerät, wobei das Rad um eine Drehachse rotierbar ist und eine Umfangsfläche aufweist, welche eine Vielzahl von bezogen auf die Drehachse radial nach außen weisenden und in Umfangsrichtung hintereinander ausgebildeten Profilblöcken aufweist.

Die Erfindung betrifft des Weiteren ein sich selbsttätig fortbewegendes Bodenbearbeitungsgerät mit mindestens einem Rad der vorgenannten Art.

### Stand der Technik

Sich selbsttätig fortbewegende Bodenbearbeitungsgeräte sind im Stand der Technik beispielsweise als autonome Reinigungsroboter bekannt, welche eine Saug- und/oder Wischaufgabe ausführen können. Die bekannten Bodenbearbeitungsgeräte verfügen über zumeist mindestens zwei Antriebsräder, welche sich mit ihrer Umfangsfläche auf der zu bearbeitenden Fläche abrollen.

Wie von Kraftfahrzeugen bekannt, werden auch Bodenbearbeitungsgeräte mit profilierten Rädern ausgestattet, die eine bessere Kraftübertragung auf die zu bearbeitende Fläche erlauben. Dies ist beispielsweise bevorzugt, wenn das Bodenbearbeitungsgerät ein Hindernis, wie beispielsweise eine Teppichkante oder eine Türschwelle, überfahren soll.

Die Druckschriften EP 2 702 915 A2, DE 10 2008 009 617 A1 und US 6 633150 A1 offenbaren beispielsweise mobile Roboter mit profilierten Rädern, wobei die Räder in Umfangsrichtung regelmäßig hintereinander angeordnete Profilblöcke aufweisen.

Obwohl profilierte Räder bereits Vorteile gegenüber nicht profilierten Rädern aufweisen, ist es dennoch möglich, dass das Bodenbearbeitungsgerät ein zu überwindendes Hindernis mehrmals anfahren muss, um dieses schließlich überwinden zu können.

### Zusammenfassung der Erfindung

Ausgehend von dem vorgenannten Stand der Technik ist es Aufgabe der Erfindung, ein sich selbsttätig fortbewegendes Bodenbearbeitungsgerät bzw. ein Rad für ein solches Bodenbearbeitungsgerät zu schaffen, bei welchem insbesondere im Hinblick auf eine Überwindung von Hindernissen eine günstige Gestaltung gefunden ist.

Zur Lösung der Aufgabe wird vorgeschlagen, dass die Profilblöcke des Rades ein in Umfangsrichtung vollkommen heterogenes Profil der Umfangsfläche bilden, so dass sich die Struktur des Profils in Umfangsrichtung nicht wiederholt. Insbesondere kann vorgesehen sein, dass das Rad Profilblöcke mit zueinander verschiedenen Formen, zueinander verschiedene Höhen, zueinander verschiedenen Abständen, zueinander verschiedenen räumlichen Orientierungen, zueinander verschiedenen Härten oder weitere Merkmale wie geneigte Profilflanken oder ein sich in benachbarten Segmenten wiederholendes Profil aufweist.

Erfindungsgemäß weist das Rad des Bodenbearbeitungsgerätes eine Umfangfläche, d. h. Lauffläche, mit einem unregelmäßig gestalteten Profil auf. Dadurch wird erreicht, dass sich beim Auftreffen der Umfangsfläche auf einem Hindernis, beispielsweise einer Türschwelle, auch bei gegebenenfalls durchdrehendem Antriebsrad, viele verschieden ausgebildete Profilblöcke anbieten, so dass insgesamt eine gegenüber homogenen Profilen erhöhte Wahrscheinlichkeit besteht, einen Profilblock zu treffen, welcher sich an dem Hindernis abstützen kann und eine ausreichende Kraftübertragung auf das Hindernis ermöglicht. Insgesamt werden somit die Fahreigenschaften des Bodenbearbeitungsgerätes, insbesondere die Traktion auf verschiedenen Flächen, wie beispielsweise verschiedenen Teppichen oder Hartböden, sowie die Klettereigenschaften verbessert. Zudem wird das Spurenbild des Bodenbearbeitungsgerätes beim Überfahren von feuchten oder verschmutzten Flächen sowie auf Teppichboden durch das heterogene Profil minimiert. Durch die Vermeidung eines Durchdrehens der Räder bzw. eines Stehenbleibens des Bodenbearbeitungsgerätes können Hindernisse schneller überwunden werden, was bei dem Einsatz des Bodenbearbeitungsgerätes Bearbeitungszeit spart. Dadurch kann wiederum ein vergrößerter Reinigungsbereich pro vollständiger Ladung eines Akkumulators erreicht werden.

Insbesondere wird vorgeschlagen, dass die Profilblöcke zueinander verschiedene Formen aufweisen. Die Profilblöcke können sich dabei von unterschiedlichen Querschnittsformen ableiten, beispielsweise rund, rechteckig, quadratisch, dreieckig und dergleichen. Des Weiteren können die Profilblöcke jedoch auch Freiformflächen aufweisen, welche gerade Kanten und/oder gekrümmte Kanten aufweisen.

Die Profilblöcke können des Weiteren bezogen auf einen in Umfangsrichtung liegenden Querschnitt polygonal geformt sein. Je größer die Anzahl der Seiten der polygonalen Querschnittsfläche ist, desto größer ist die Wahrscheinlichkeit, dass eine der Seiten so steht, dass sich das Rad an einem zu überwindenden Hindernis abstützen kann.

Zudem kann alternativ oder zusätzlich vorgesehen sein, dass die Profilblöcke bezogen auf eine radiale Richtung des Rades zueinander verschiedene Höhen aufweisen. Insbesondere ist es empfehlenswert, dass mehrere oder alle Profilblöcke eine Höhendifferenz von mehr als 0,5 mm zu anderen Profilblöcken aufweisen. Die die Umfangsfläche des Rades bildenden Stirnseiten der Profilblöcke ragen somit unterschiedlich weit aus dem gesamten Profil heraus, so dass einige der Profilblöcke andere überragen. Dadurch ist es möglich, dass mehrere Profilblöcke gleichzeitig an einer Kante des Hindernisses anliegen können, so dass insgesamt eine größere Haftkraft resultiert. Darüber hinaus ergeben sich, gegebenenfalls zusätzlich zu Zwischenräumen zwischen den Profilblöcken, Bereiche, in welche ein Hindernis zumindest teilweise eingreifen kann, so dass die Kraftübertragung des Bodenbearbeitungsgerätes auf die Fläche optimiert werden kann. In der Praxis hat sich eine Höhendifferenz von mindestens 0,5 mm als vorteilhaft herausgestellt, wobei auch Höhendifferenzen von 1,0 mm, 1,5 mm, 2 mm, oder mehr vorteilhaft sein können.

Es wird vorgeschlagen, dass die Profilblöcke verschiedene Abstände zueinander aufweisen. Die benachbarten Profilblöcke weisen somit unterschiedliche Abstände auf, so dass ein erster Profilblock zu einem zweiten Profilblock einen anderen Abstand aufweisen kann als zu einem dritten Profilblock. Die Profilblöcke können beispielsweise weniger als 1 mm zueinander beabstandet sein. Es sind aber auch Abstände von mehreren Millimetern möglich. Somit können sich auch Teilbereiche auf der Umfangsfläche des Rades ergeben, welche keine Profilblöcke aufweisen, so dass die angrenzenden Profilblöcke das Hindernis aus unterschiedlichen räumlichen Richtungen kontaktieren können. Somit greift beispielsweise eine Seitenfläche eines Profilblocks an dem Hindernis an. Auch wenn der Profilblock das Hindernis somit nicht mit einer Stirnseite kontaktiert, wird trotzdem ein Abrutschen des Rades von dem Hindernis verhindert.

Insbesondere wird vorgeschlagen, dass die Profilblöcke bezogen auf die Umfangsfläche zueinander verschiedene räumliche Orientierungen aufweisen. Je nach der Orientierung und Formgestaltung eines zu überwindenden Hindernisses besteht somit eine hohe Wahrscheinlichkeit, dass einer oder mehrere Profilblöcke des Rades eine belastbare Kontaktfläche zu dem Hindernis bereitstellen, so dass ein Überwinden des Hindernisses möglich ist.

Des Weiteren wird vorgeschlagen, dass die Profilblöcke aus zueinander verschieden hartem Material ausgebildet sind. Insbesondere können die Profilblöcke aus einem elastischen Kunststoff bestehen, insbesondere einem flexiblen, gummiartigen Kunststoff wie EPDM (Ethylen-Propylen-Dien-(Monomer)-Kautschuk). Aufgrund der Elastizität des Materials wird die Umfangsfläche des Rades bei Auflage auf der Fläche bzw. Anlage an einem Hindernis verformt, wodurch ein Reibwiderstand zwischen dem Rad und der befahrenen Fläche bzw. dem Hindernis steigt. Somit kann die Antriebskraft des Bodenbearbeitungsgerätes optimal auf die Fläche bzw. das zu überwindende Hindernis übertragen werden. Gegebenenfalls kann sich die Umfangsfläche des Rades zudem an eine Form oder Oberflächenstruktur der Fläche bzw. des Hindernisses anpassen, was wiederum die Haftkraft erhöht.

Es kann vorgesehen sein, dass die Profilblöcke relativ zu einer radialen Richtung geneigte Profilflanken aufweisen. Die Profilflanken, d. h. die Seitenflächen, der dreidimensionalen Profilblöcke sind somit nicht in radialer Richtung, d. h. nicht senkrecht zu der Umfangsfläche des Rades ausgerichtet, sondern stehen dazu geneigt. Zudem kann es grundsätzlich auch vorgesehen sein, dass die Stirnfläche eines oder mehrerer Profilblöcke relativ zu einer Tangente des betreffenden Umfangsteilbereiches geneigt ist. Auch durch diese Maßnahme werden die Möglichkeiten erhöht, dass ein Teilbereich eines oder mehrerer Profilblöcke an einem zu überwindenden Hindernis angreifen kann.

### Kurze Beschreibung der Zeichnungen

Im Folgenden wird die Erfindung anhand von Ausführungsbeispielen näher erläutert. Es zeigen:
- Fig. 1: eine perspektivische Ansicht eines erfindungsgemäßen Bodenbearbeitungsgerätes,
- Fig. 2: ein erfindungsgemäßes Rad für ein Bodenbearbeitungsgerät in einer Seitenansicht,
- Fig. 3: eine Draufsicht auf einen Teilbereich einer Umfangsfläche des Rades.

### Beschreibung der Ausführungsformen

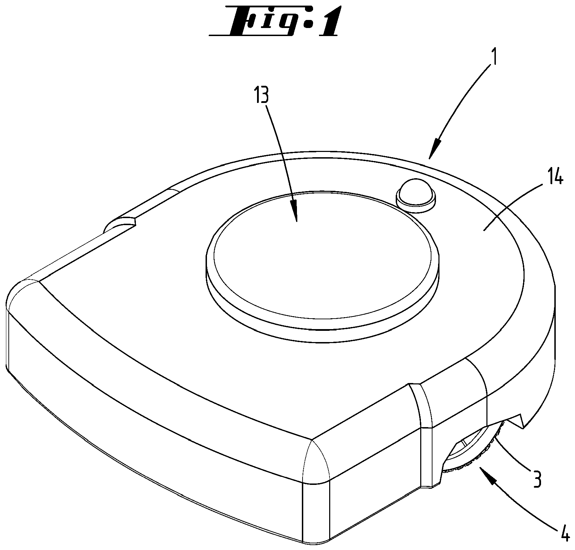

Figur 1 zeigt zunächst ein Bodenbearbeitungsgerät 1, welches hier beispielsweise als autonomer Saugroboter ausgebildet ist. Das Bodenbearbeitungsgerät 1 verfügt hier über ein Gehäuse 14 und beispielsweise zwei Räder 4, welche motorisch angetrieben sind. Das Bodenbearbeitungsgerät 1 weist des Weiteren eine in dem Gehäuse 14 aufgenommene Abstandsmesseinrichtung 13 auf, welche vorzugsweise eine optische Sensorik umfasst. Die Abstandsmesseinrichtung 13 kann beispielsweise eine Triangulationsmesseinrichtung aufweisen, welche Abstände zu Hindernissen in der Umgebung des Bodenbearbeitungsgerätes 1 misst. Aus den aufgenommenen Daten kann eine Navigations- und Selbstlokalisierungseinrichtung des Bodenbearbeitungsgerätes 1 eine Karte der Umgebung erstellen, anhand welcher sich das Bodenbearbeitungsgerät 1 bei einer selbsttätigen Fortbewegung orientieren kann.

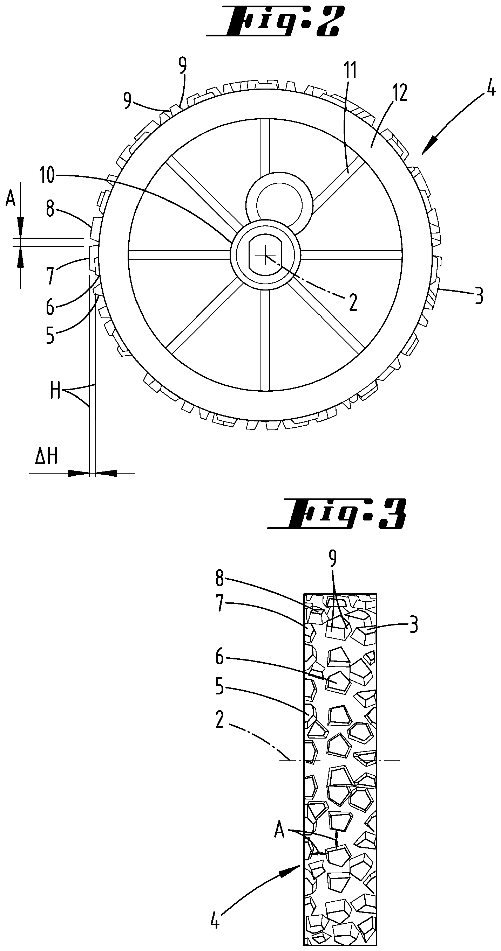

Die Räder 4 weisen im Einzelnen jeweils eine Nabe 10, mehrere Speichen 11 und einen Reifen 12 mit einer Umfangsfläche 3 auf (siehe auch Figuren 2 bis 3). Die Umfangsfläche 3 des Rades 4 bildet eine Kontaktfläche, welche bei einer Fortbewegung des Bodenbearbeitungsgerätes 1 auf einer Fläche abrollt. Das Rad 4 rotiert um eine Drehachse 2 (in Figur 2 angedeutet), welche von der Nabe 10 aufgenommen wird. Der Reifen 12 weist ein Profil mit einer Vielzahl von Profilblöcken 5, 6, 7, 8 auf. Die Profilblöcke 5, 6, 7, 8 bestehen aus einem elastischen Material. Es kann sich beispielsweise um Gummi, eine Gummimischung oder ein thermoplastisches Elastomer handeln. Hier wird insbesondere EPDM als flexibler, gummiartiger Kunststoff vorgeschlagen. Die Umfangsfläche 3 ist durch die Profilblöcke 5, 6, 7, 8 gebildet, wobei die Profilblöcke 5, 6, 7, 8 bezogen sowohl auf eine Umfangsrichtung als auch auf eine dazu senkrechte axiale Richtung des Rades 4 ein heterogenes Profil ausbilden. Bei üblicher Fahrbeanspruchung des Bodenbearbeitungsgerätes 1 auf einer ebenen Fläche und ohne den Sonderfall einer Zusammenwirkung des Rades 4 mit einem Hindernis, ist eine Kontaktfläche des Rades 4 mit der befahrenen Fläche nur durch die Stirnseiten der Profilblöcke 5, 6, 7, 8 gegeben. Die Profilblöcke 5, 6, 7, 8 bilden zusammen mit weiteren in Radialrichtung weisenden Flächen des Reifens 12 die Umfangsfläche 3. Zumindest theoretisch kann jeder Bereich der Umfangsfläche 3 mit einer Fläche bzw. einem Hindernis in Kontakt treten. Dabei können auch Bereiche außer den Stirnflächen der Profilblöcke 5, 6, 7, 8 zumindest temporär Teil der Kontaktfläche des Rades 4 werden.

Im Folgenden werden anhand der Figuren 2 bis 3 verschiedene mögliche Merkmale des Profils des Rades 4 dargestellt. Hier weisen die Profilblöcke 5, 6, 7, 8 eine Vielzahl möglicher Merkmale auf, welche jedoch auch alternativ in Alleinstellung verwendet werden könnten, so dass sich eine Vielzahl von anderen Ausführungsformen mit Unterkombinationen oder auch alleingestellten Merkmalen ergeben kann. Insofern ist das gezeigte Ausführungsbeispiel nicht beschränkend zu verstehen.

Figur 2 zeigt eine Seitenansicht eines beispielhaften Rades 4, dessen Umfangsfläche 3 eine Vielzahl von bezogen auf die Drehachse 2 radial nach außen weisenden und in Umfangsrichtung hintereinander ausgebildeten Profilblöcken 5, 6, 7, 8 aufweist. Hier sind nur vier Profilblöcke 5, 6, 7, 8 der Vielzahl von dargestellten Profilblöcken mit Bezugszeichen versehen. Das Profil des Rades 4 kann in Umfangsrichtung vollkommen heterogen sein oder Segmente aufweisen, die eine identische Anordnung von Profilblöcken 5, 6, 7, 8 aufweisen, so dass sich die Struktur des Profils in Umfangsrichtung in definierten Abständen wiederholt. Die in der Figur beispielhaft bezifferten Profilblöcke 5, 6, 7, 8 weisen zueinander verschiedene Formen, Höhen H und Abstände A auf. Wie aus Figur 3 erkennbar, haben die Profilblöcke 5 bis 8 zudem auch zueinander verschiedene räumliche Orientierungen. Des Weiteren sind die Profilflanken 9 zumindest einiger Profilblöcke 5, 6, 7, 8 nicht senkrecht zu der Umfangsfläche 3 orientiert, sondern relativ zu einer radialen Richtung geneigt. Selbstverständlich ist es jedoch auch möglich, dass die Profilblöcke 5, 6, 7, 8 steil abfallende Profilflanken 9 aufweisen. Grundsätzlich sind auch Überhänge der Profilflanken 9 möglich.

Die Profilblöcke 5, 6, 7, 8 sind bezogen auf ihre radial nach außen weisende Stirnfläche, d. h. Lauffläche, sowie auch die darunter liegenden Querschnitte polygonal geformt, hier mit vier oder mehr Seitenflächen. Die Profilblöcke 5, 6, 7, 8 weisen zudem verschiedene Höhen H auf. Der Profilblock 6 weist beispielsweise eine geringere Höhe H auf als der Profilblock 7. Es besteht hier beispielsweise eine Höhendifferenz ΔH von 1 mm. Die Abstände A der Profilblöcke 5, 6, 7, 8 sind des Weiteren ebenfalls unterschiedlich bemessen. Wie in Figur 3 erkennbar, variieren die Abstände A von nahezu 0 bis hin zu mehreren Millimetern. Teilweise sind die Abstände A so groß wie eine Seite einer Stirnfläche eines Profilblocks 5, 6, 7, 8.

Das Rad 4 ist hier nicht zwingend maßstabsgetreu dargestellt. Ein übliches Rad 4 für ein Bodenbearbeitungsgerät 1 kann beispielsweise einen Durchmesser von 75 mm und eine axiale Breite von 13 mm aufweisen. Zudem muss das Rad 4 auch nicht mit einer Nabe 10, Speichen 11 und einem Reifen 12 ausgebildet sein. Vielmehr kann es sich bei dem Rad 4 alternativ um ein Vollmaterialrad handeln.

Die dargestellten Merkmale des Rades 4, insbesondere die besonderen Merkmale der Profilblöcke 5, 6, 7, 8, sorgen dafür, dass das Rad 4 beim Auftreffen auf ein Hindernis eine Vielzahl von völlig verschieden orientierten Profilkanten anbietet, so dass gegenüber regelmäßigen Profilen eine erhöhte Wahrscheinlichkeit besteht, einen Profilblock 5, 6, 7, 8 zu finden, dessen Profilkante ausreichend fest an dem Hindernis angreift, so dass das Hindernis überwunden werden kann. Beim Überfahren von Hindernissen wie Türschwellen und/oder Absätzen findet das Rad 4 durch die unsymmetrisch ausgebildete Profilstruktur aus unregelmäßig gestalteten Profilblöcken 5, 6, 7, 8, die hier aus einer Vielzahl noppenförmiger Vielecke bestehen und in zufälliger Größe und Orientierung verteilt sind, immer einen Teilbereich der Umfangsfläche 3, welcher sich an dem Hindernis abstützen und daran hochziehen kann. Die Profilblöcke 5, 6, 7, 8 können zudem Materialien unterschiedlicher Härte aufweisen, so dass einige der Profilblöcke 5, 6, 7, 8 weicher oder härter sind als andere.

### Liste der Bezugszeichen

- 1: Bodenbearbeitungsgerät
- 2: Drehachse
- 3: Umfangsfläche
- 4: Rad
- 5: Profilblock
- 6: Profilblock
- 7: Profilblock
- 8: Profilblock
- 9: Profilflanke
- 10: Nabe
- 11: Speiche
- 12: Reifen
- 13: Abstandsmesseinrichtung
- 14: Gehäuse

- A: Abstand
- H: Höhe
- ΔH: Höhendifferenz

## Patentansprüche

1. Rad (4), für ein sich selbsttätig fortbewegendes Bodenbearbeitungsgerät (1), wobei das Rad (4) um eine Drehachse (2) rotierbar ist und eine Umfangsfläche (3) aufweist, welche eine Vielzahl von bezogen auf die Drehachse (2) radial nach außen weisenden und in Umfangsrichtung hintereinander ausgebildeten Profilblöcken (5, 6, 7, 8) aufweist, **dadurch gekennzeichnet, dass** die Profilblöcke (5, 6, 7, 8) ein in Umfangsrichtung vollkommen heterogenes Profil der Umfangsfläche (3) bilden, so dass sich die Struktur des Profils in Umfangsrichtung nicht wiederholt.

2. Sich selbsttätig fortbewegendes Bodenbearbeitungsgerät (1) mit mindestens einem Rad (4) nach Anspruch 1.

3. Bodenbearbeitungsgerät (1) nach Anspruch 2, **dadurch gekennzeichnet, dass** die Profilblöcke (5, 6, 7, 8) zueinander verschiedene Formen aufweisen.

4. Bodenbearbeitungsgerät (1) nach Anspruch 2 oder 3, **dadurch gekennzeichnet, dass** die Profilblöcke (5, 6, 7, 8) bezogen auf einen in Umfangsrichtung liegenden Querschnitt polygonal geformt sind.

5. Bodenbearbeitungsgerät (1) nach einem der Ansprüche 2 bis 4, **dadurch gekennzeichnet, dass** die Profilblöcke (5, 6, 7, 8) bezogen auf eine radiale Richtung des Rades (4) zueinander verschiedene Höhen (H), insbesondere Höhendifferenzen (ΔH) von größer als 0,5 mm, aufweisen.

6. Bodenbearbeitungsgerät (1) nach einem der Ansprüche 2 bis 5, **dadurch gekennzeichnet, dass** die Profilblöcke (5, 6, 7, 8) verschiedene Abstände (A) zueinander aufweisen.

7. Bodenbearbeitungsgerät (1) nach einem der Ansprüche 2 bis 6, **dadurch gekennzeichnet, dass** die Profilblöcke (5, 6, 7, 8) bezogen auf die Umfangsfläche zueinander verschiedene räumliche Orientierungen aufweisen.

8. Bodenbearbeitungsgerät (1) nach einem der Ansprüche 2 bis 7, **dadurch gekennzeichnet, dass** die Profilblöcke (5, 6, 7, 8) aus zueinander verschieden hartem Material, insbesondere elastischem Kunststoff, ausgebildet sind.

9. Bodenbearbeitungsgerät (1) nach einem der Ansprüche 2 bis 8, **dadurch gekennzeichnet, dass** die Profilblöcke (5, 6, 7, 8) relativ zu einer radialen Richtung geneigte Profilflanken (9) aufweisen.

## Claims

1. A wheel (4) for a floor treatment appliance (1), wherein the wheel (4) can be rotated about an axis of rotation (2) and has a circumferential surface, (3) which has a plurality of profile blocks (5, 6, 7, 8), which, based on the axis of rotation (2), face radially to the outside and which are embodied in succession in the circumferential direction, **characterized in that** the profile blocks (5, 6, 7, 8) form a profile of the circumferential surface (3), which is completely heterogeneous in the circumferential direction, so that the structure of the profile is not repeated in the circumferential direction.

2. An automatically moving floor treatment appliance (1) comprising at least one wheel (4) according to claim 1.

3. The floor treatment appliance (1) according to claim 2, **characterized in that** the profile blocks (5, 6, 7, 8) have shapes, which differ from one another.

4. The floor treatment appliance (1) according to claim 2 or 3, **characterized in that** the profile blocks (5, 6, 7, 8) are formed so as to be polygonal, based on a cross section located in the circumferential direction.

5. The floor treatment appliance (1) according to one of the claims 2 to 4, **characterized in that** the profile blocks (5, 6, 7, 8) have different heights (H), in particular height differences (ΔH) of greater than 0.5 mm, relative to one another, based on a radial direction of the wheel (4).

6. The floor treatment appliance (1) according to one of the claims 2 to 5, **characterized in that** the profile blocks (5, 6, 7, 8) have different distances (A) relative to one another.

7. The floor treatment appliance (1) according to one of the claims 2 to 6, **characterized in that** the profile blocks (5, 6, 7, 8) have different spatial orientations relative to one another, based on the circumferential surface.

8. The floor treatment appliance (1) according to one of the claims 2 to 7, **characterized in that** the profile blocks (5, 6, 7, 8) are made of material of a different hardness relative to one another, in particular elastic plastic.

9. The floor treatment appliance (1) according to one of the claims 2 to 8, **characterized in that** the profile blocks (5, 6, 7, 8) have profile flanks (9), which are inclined relative to a radial direction.

## Revendications

1. Roue (4) pour un appareil de traitement de sol (1) à déplacement automatique, dans lequel la roue (4) peut tourner autour d'un axe de rotation (2) et présente une surface circonférentielle (3) qui présente une pluralité de blocs profilés (5,6,7,8) orientés radialement vers l'extérieur par rapport à l'axe de rotation (2) et formés les uns derrière les autres dans la direction circonférentielle, **caractérisée en ce que** les blocs profilés (5,6,7,8) forment un profil de la surface circonférentielle (3) qui est complétement hétérogène dans la direction circonférentielle de manière que la structure du profil ne se répète pas dans la direction circonférentielle.

2. Appareil de traitement de sol (1) à déplacement automatique, comportant au moins une roue (4) selon la revendication 1.

3. Appareil de traitement de sol (1) selon la revendication 2, **caractérisé en ce que** les blocs profilés (5,6,7,8) ont des formes différentes les uns des autres.

4. Appareil de traitement de sol (1) selon la revendication 2 ou 3, **caractérisé en ce que** les blocs profilés (5,6,7,8) ont une forme polygonale par rapport à une section transversale située dans la direction circonférentielle.

5. Appareil de traitement de sol (1) selon l'une des revendications 2 à 4, **caractérisé en ce que** les blocs profilés (5,6,7,8) présentent des hauteurs (H) différentes les uns des autres, en particulier des différences de hauteur (ΔH) supérieures à 0,5 mm, par rapport à une direction radiale de la roue (4).

6. Appareil de traitement de sol (1) selon l'une des revendications 2 à 5, **caractérisé en ce que** les blocs profilés (5,6,7,8) présentent des distances de séparation (A) différentes les uns par rapport aux autres.

7. Appareil de traitement de sol (1) selon l'une des revendications 2 à 6, **caractérisé en ce que** les blocs profilés (5,6,7,8) présentent, par rapport à la surface circonférentielle, des orientations spatiales différentes les uns des autres.

8. Appareil de traitement de sol (1) selon l'une des revendications 2 à 7, **caractérisé en ce que** les blocs profilés (5,6,7,8) sont réalisés en un matériau, notamment en matière plastique élastique, de dureté différente les uns par rapport aux autres.

9. Appareil de traitement de sol (1) selon l'une des revendications 2 à 8, **caractérisé en ce que** les blocs profilés (5,6,7,8) présentent des flancs profilés (9) qui sont inclinés par rapport à une direction radiale.
